# EUROPEAN PATENT SPECIFICATION

(11) **EP 1 417 918 B1**
(45) Date of publication and mention of the grant of the patent: **28.12.2005**
(21) Application number: 03256468.4
(22) Date of filing: 14.10.2003
(51) Int. Cl.: A47J 37/06

(54) **Cooking apparatus**
Kochvorrichtung
Dispositif de cuisson

(30) Priority: 09.11.2002 KR 2002069444; 06.02.2003 KR 2003007563
(43) Date of publication of application: 12.05.2004
(73) Proprietor: SAMSUNG ELECTRONICS CO., LTD., Suwon-City, Kyungki-do (KR)
(72) Inventor: Han, Dae-Sung, Hwasung-City Kyungki-do (KR); Kim, Chul, Yongin-City Kyungki-Do (KR); Han, Yong-Woon, Kunpo-City Kyungki-Do (KR); Jang, Seong-Deog, Suwon-City Kyungki-Do (KR); Hahm, Kyung-Hee, Youngdungpo-Gu Seoul (KR); Yeo, Joo-Yeong, Hwasung-City Kyungki-do (KR); Kang, Han-Seong, Paldal-Gu Suwon-City Kyungki-Do (KR)
(74) Representative: Robinson, Ian Michael

(56) References cited:
- FR-A- 2 670 274
- GB-A- 2 286 111
- US-A- 3 152 242
- US-A- 3 154 004
- US-A- 5 189 945

## Description

The present invention relates generally to a cooking apparatus, and more particularly, to a cooking apparatus that is capable of effectively transferring heat to food to be cooked, thereby improving an energy efficiency of the cooking apparatus and reducing cooking time.

Generally, meat, such as beef and pork, and processed meat, such as sausage and ham, are most delicious when grilled, in which food is cooked by directly applying heat to the food while putting the food on a grill. Accordingly, people are fond of having meat and processed meat grilled.

In general, a cooking apparatus that grills food includes a heating unit that applies heat to food, and a grill unit on which the food is put to be partially exposed to the heating unit. The cooking apparatus functions to cook the food by transferring heat generated by the heating unit to food put on the grill unit.

To grill meat such as beef, pork, and mutton, the meat is cut into slices having an appropriate size, and is put on the grill unit, and sauce made of various condiments is applied thereto. When slices of meat mixed with sauce are heated by heat transferred from the heating unit, oil contained in the slices of meat and sauce applied to the meat drop downward.

Consequently, an oil collecting unit is provided in a body of the cooking apparatus to collect heated oil and sauce that drop downward from the slices of meat. The oil collecting unit is disposed under the grill unit, and the heating unit is disposed between the grill unit and the oil collecting unit.

But the conventional cooking apparatus constructed as described above cooks food using only heat transferred upward from the heating unit, because the heating unit is disposed just under the grill unit. Accordingly, the conventional cooking apparatus cannot effectively transfer heat to the food, so the conventional cooking apparatus has a low energy efficiency, and requires a lengthy cooking time.

Additionally, the conventional cooking apparatus is disadvantageous in that the grill unit is maintained at high temperature by the heat received from the heating unit, so portions of food in contact with the heated grill unit burn, thus deteriorating the taste of the food and potentially doing harm to users' health.

FR-A-2670274 discloses a cooking apparatus having a grill unit, an electric heating element arranged under the grill unit, and a metal reflector floating on a body of water and positioned under the electric heating element. This document forms the pre-characterising portion of independent claim 1 appended hereto.

It is an aim of the present invention to provide a cooking apparatus, which is capable of allowing heat generated by a heating unit to be effectively transferred to food.

It is another aim of the present invention to provide a cooking apparatus, which is capable of preventing oil and sauce from being burned by the heat of a heating unit after the oil and sauce drop from cooking food onto a heat reflecting unit.

Other aims and advantages of the invention will be set forth in part in the description which follows and, in part, will be obvious from the description, or may be learned by practice of the invention.

According to the present invention there is provided an apparatus and method as set forth in the appended claims. Preferred features of the invention will be apparent from the dependent claims, and the description which follows.

In one aspect of the present invention are achieved by providing a cooking apparatus, which has a body provided in a top thereof with an opening, at least one heating unit arranged in the body, a grill unit mounted on the top of the body, and a heat reflecting unit arranged below the grill unit to face the heating unit, wherein the heat reflecting unit has an inner space that contains water, a water inlet through which the water is fed into the inner space, a water level maintaining unit suitable to maintain the water below a predetermined water level in the inner space, and a water vapor discharging space positioned in an upper portion of the inner space.

Preferably, the heat reflecting unit has a bottom plate, front and rear plates, side plates, and a pair of inner reflecting plates and a pair of outer reflecting plates positioned within the front, rear, bottom, and side plates, the inner reflecting plates are positioned in contact with each other at upper ends thereof and the upper ends of the inner reflecting plates are farther from the bottom plate than the upper ends of the outer reflecting plates which are spaced apart from each other, and the front plate includes an upper surface, and inner and outer surfaces, and the front plate is provided in the upper surface thereof with a water inlet, and in the inner surface thereof, at a predetermined distance from the bottom plate, the front plate is provided with the water level maintaining unit, that has at least one overflow hole.

Preferably, the overflow hole is positioned at a distance from the bottom plate substantially equal to that of the upper ends of the outer reflecting plates, so that the water contained in the inner space of the heat reflecting unit is maintained at a level corresponding to that of the upper ends of the outer reflecting plates.

Preferably, the outer surface of front plate of the heat reflecting unit comprises a water level window, to ascertain the water level of the inner space of the heat reflecting unit.

Preferably, the bottom plate is convex, so that the inner space of the heat reflecting unit is filled with a predetermined amount of water.

Preferably, the front plate of the heat reflecting unit is positioned outside the body when the heat reflecting unit is inserted into the body, so that oil and sauce separated from food are prevented from entering the inner space of the heat reflecting unit through the water inlet.

For a better understanding of the invention, and to show how embodiments of the same may be carried into effect, reference will now be made, by way of example, to the accompanying diagrammatic drawings in which:
Figure 1 is an exploded perspective view of a cooking apparatus, according to an embodiment of the present invention;

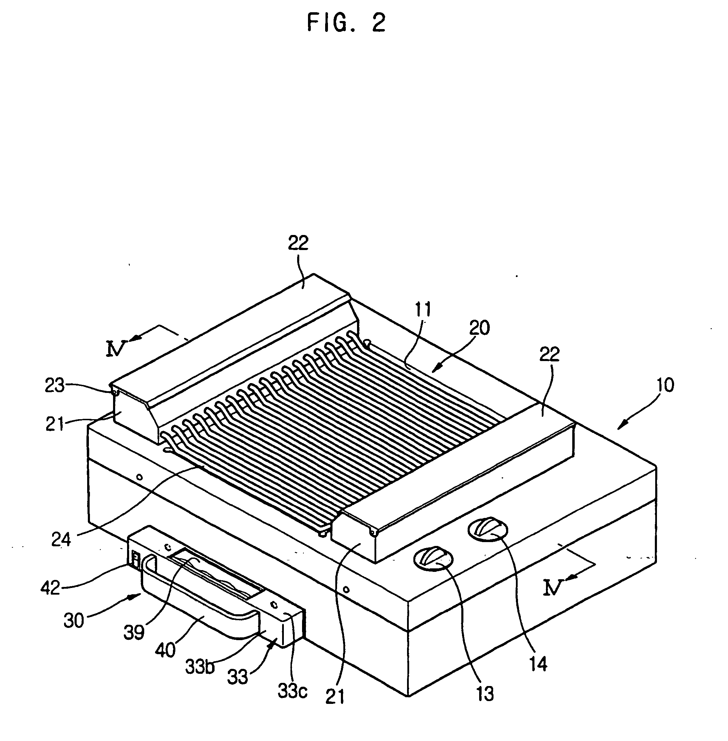

Figure 2 is a perspective view of the cooking apparatus of Figure 1;

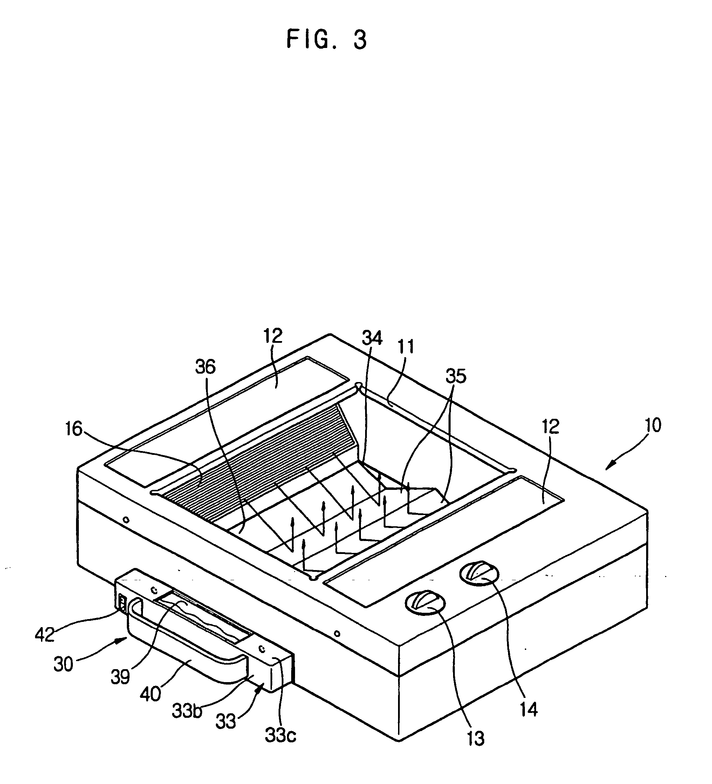

Figure 3 is a perspective view of the cooking apparatus of Figure 1 with a grill unit removed from a body, illustrating operation of a heat reflecting unit; and
Figure 4 is a sectional view of the cooking apparatus of Figure 1, taken along line IV-IV of Figure 2, illustrating a structure of the heat reflecting unit.

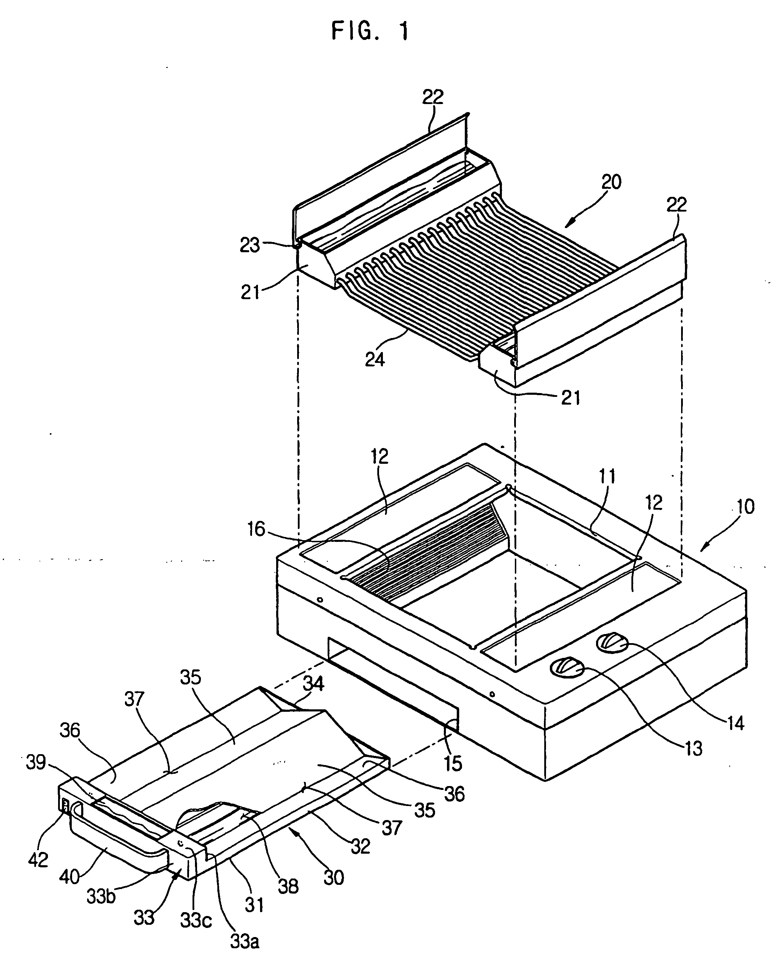

The cooking apparatus shown in Figure 1 has a body 10 constructed roughly in a box form, a plurality of heating units 16 disposed in the body 10 to apply heat to food, a grill unit 20 seated on a top of the body 10 to put food thereon, and a heat reflecting and oil collecting unit 30 positioned in a lower portion of the body 10 to transfer radiant heat to the grill unit 20, and simultaneously receive and collect oil generated from food put on the grill unit 20. That is, the heat reflecting and oil collecting unit 30 is constructed by integrating a heat reflecting structure with an oil collecting structure. Additionally, the heat reflecting and oil collecting unit 30 cools a heat reflecting plate, which will be described later, to prevent dropped oil from burning. Hereinafter, the heat reflecting and oil collecting unit 30 will be referred to as the "heat reflecting unit 30" for ease of description.

An opening 11 is provided in the top of the body 10 to allow heat generated from the heating units 16 to be transferred to the grill unit 20, and concave seat portions 12 are positioned on first and second sides of the opening 11 to stably seat the grill unit 20 thereon. A timer switch 13 and a power switch 14 are positioned on a portion of the top of the body 10 to adjust the heating time and temperature of the heating units 16. Further, a slot 15 is positioned in the lower end portion of the body 10 to insert and remove the heat reflecting unit 30 therethrough.

The heating units 16 are a pair of heating units 16 arranged on first and second sides of an interior of the body 10, and are inclined toward the opening 11. According to one aspect, the heating units 16 are ceramic bodies with electrothermal wires encapsulated therein to produce high-temperature far infrared rays. According to another aspect, the heating units 16 are gas heaters that generate heat by burning gas. According to yet another aspect, the heating units 16 are charcoal heaters that generate heat by burning charcoal.

The grill unit 20 has: a pair of water tanks 21 that are spaced apart from each other and seated on the seat portions 12, respectively; and a plurality of grill pipes 24 that are each connected at both ends thereof to the respective water tanks 21, and are filled with water.

A lid 22 is mounted on an open top of each of the water tanks 21 to selectively open and close the open top of the water tank 21 through the use of a hinge 23. Accordingly, the water tank 21 is filled with water while the lid 22 is opened, and the grill pipes 24 are filled with water, so that the portions of food in contact with the grill pipes 24 do not burn. Then, the lid 22 is closed.

The heat reflecting unit 30 includes: a bottom plate 31 with a rectangular shape; two side plates 32 upwardly extending from side edges of the bottom plate 31; front and rear plates 33 and 34 upwardly extending from front and rear edges of the bottom plate 31, respectively; and a pair of inner reflecting plates 35 and a pair of outer reflecting plates 36, arranged within the side, front, and rear plates 32, 33, and 34, above the bottom plate 31.

The inner and outer reflecting plates 35 and 36 roughly approximate a W shape, and receive radiant heat transferred from the heating units 16, and reflect the radiant heat toward the grill pipes 24. The inner reflecting plates 35 are arranged side by side with upper ends thereof contacting each other. The outer reflecting plates 36 are spaced apart from each other with upper ends thereof connected to the side plates 32, and lower ends thereof connected to lower ends of the inner reflecting plates 35.

Accordingly, a recess 37 is positioned at each of the intersections of the inner reflecting plates 35 and the outer reflecting plates 36, so that oil dropping from food onto the inner and outer reflecting plates 35 and 36 collects within the recess 37.

Further, the inner and outer reflecting plates 35 and 36 are connected to the side plates 32 and the front and rear plates 33 and 34, such that an inner space 38 is defined in between the side plates 32 and the front and rear plates 33 and 34 by the inner and outer reflecting plates 35 and 36, and the bottom plate 31.

The inner reflecting plates 35 are connected at upper ends thereof near the grill unit 20, and are higher than lower ends of the heating units 16, so that heat generated by the heating units 16 is effectively reflected to the grill unit 20.

The front plate 33 includes an inner surface 33a, an outer surface 33b, and an upper surface 33c. In a top of the front plate 33, there is a water inlet 39. When water is fed into the water inlet 39, the inner space 38 of the heat reflecting unit 30 is filled with the water. Accordingly, even though heat generated by the heating units 16 is transferred to the heat reflecting unit 30, oil and sauce collected within the recesses 37 and adhering to the inner and outer reflecting plates 35 and 36 are prevented from burning.

When the heat reflecting unit 30 is inserted into the body 10 through the slot 15, the front plate 33 of the heat reflecting unit 30 is positioned outside the body 10, so that oil and sauce separated from food are prevented from entering the inner space 38 of the heat reflecting unit 30 through the water inlet 39.

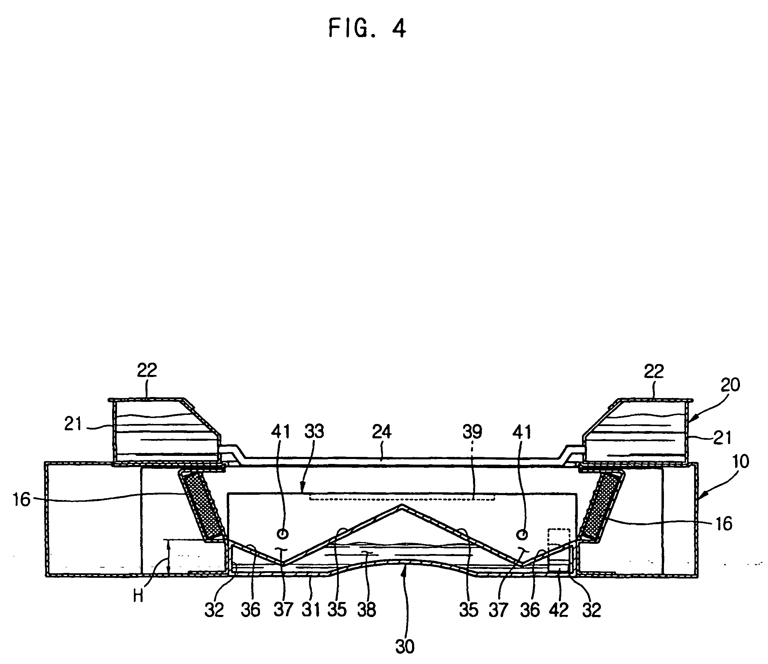

A pair of overflow holes 41 (see Figure 4) are positioned on the front surface 33a of the front plate 33, to fill the inner space 38 with water to a certain level. The overflow holes 41 are positioned at a height substantially equal to a height H (see Figure 4) of upper ends of the outer reflection plates 36. That is, water filling the inner space 38 of the heat reflecting unit 30 is maintained at the height of the upper ends of the outer reflecting plates 36. Therefore, even though a large amount of heat is transferred to the outer portions of the outer reflecting plates 36 near the heating units 16, the outer reflecting plates 36 are maintained below a predetermined temperature by the water in the inner space 38.

The overflow holes 41 are arranged above the recesses 37, so that excess water flows into the recesses 37 through the overflow holes 41 when water fed through the water inlet 39 reaches the height of the overflow holes 41.

To prevent water from being excessively fed to the inner space, a water level window 42 made of transparent material is positioned on the outer surface 33b of the front plate 33. The water level window 42 has a height ranging from a lower end of the outer surface 33b to a position somewhat higher than the height of the overflow holes 41. A graduation is formed at a height corresponding to the height of the overflow holes 41. Thus water does not overflow through the overflow holes 41 when water is fed to a water level equal to or below the graduation.

As shown in Figure 4, the bottom plate 31 of the heat reflecting unit 30 is convex, so that the inner space 38 of the heat reflecting unit 30 is filled with an appropriate amount of water. The convex bottom plate 31 prevents the temperature of the heat reflecting unit 30 from being excessively lowered, and minimizes use of water.

A grip 40 is positioned on the front surface 33b of the front plate 33, so that the heat reflecting unit 30 is slidably inserted into or removed from an interior of the body 10 when a user selectively pushes and pulls the heat reflecting unit 30 through the slot 15 of the body 10.

Water is filled into the inner space 38 of the heat reflecting unit 30 through the water inlet 39 while a water level is checked through the water level window 42 so that the water level does not exceed the water level of the graduation. And water is filled into the water tanks 21 to fill the grill pipes 24 with water. In this state, when power is applied, heat is transferred to the grill pipes 24.

When meat is put on the grill pipes 24, part of heat generated by the heating units 16 is directly transferred to the grill pipes 24 of the grill unit 20 and part of the heat is reflected to the grill pipes 24 by the inner and outer reflecting plates 35 and 36, thus grilling the food.

The interiors of the grill pipes 24 are filled with water, thus cooling the grill pipes 24 so that portions of food in contact with the grill pipes 24 are prevented from burning and adhering to the grill pipes 24, even though the grill pipes 24 receive heat from the heating units 16.

Meanwhile, the oil and sauce that drop downward during cooking, flow along the inner and outer reflecting plates 35 and 36, and are collected within the recesses 37.

In this case, even though oil and sauce drop onto the inner and outer reflecting plates 35 and 36, oil and sauce collected within the recesses 37 and adhering to the inner and outer reflecting plates 35 and 36 are prevented from burning, because the interior of the heat reflecting unit 30 is also filled with water. Accordingly, cleaning of the heat reflecting unit 30 performed after cooking is easily carried out.

Further, water vapor formed when water is evaporated by heat transferred from the heating unit 16 rises to an upper portion of an interior formed by the inner reflecting plates 35 and is discharged from the heat reflecting unit 30 through the overflow holes 41 and the water inlet 39, so the inner space 38 of the heat reflecting unit 30 is prevented from being overheated.

As described above in detail, the cooking apparatus directly transfers heat generated by the heating units to the grill unit and reflects heat to the grill unit through the use of the heat reflecting unit, so the energy efficiency of the cooking apparatus is increased and the cooking time is shortened.

In addition, the cooking apparatus is constructed so that the interiors of the grill pipes are filled with water. Accordingly, the portions of food in contact with the grill pipes are prevented from adhering to the grill pipes, so the food is cooked properly and burning is prevented. Thus, smoke is not produced by the cooking apparatus, resulting in cleaner and healthier air.

In addition, the cooking apparatus of the present invention allows the interior of the heat reflecting unit to be filled with water at an appropriate water level, so the heat reflecting unit reflects heat under an optimum condition and oil and sauce dropping onto the heat reflecting unit are prevented from burning, thus facilitating cleaning of the cooking apparatus.

Although a few preferred embodiments have been shown and described, it will be appreciated by those skilled in the art that various changes and modifications might be made without departing from the scope of the invention, as defined in the appended claims.

## Claims

1. A cooking apparatus, comprising:
a body (10) provided in a top thereof with an opening (11);
at least one heating unit (16) arranged in the body (10);
a grill unit (20) mounted on the top of the body (10); and
a heat reflecting unit (30) arranged below the grill unit (20) to face the heating unit;
**characterised in that** the heat reflecting unit (30) has an inner space (38) to contain water, a water inlet (39) through which the water is fed into the inner space (38), a water level maintaining unit (41) suitable to maintain the water below a predetermined water level in the inner space (38), and a water vapor discharging space (39,41) positioned in an upper portion of the inner space (38).

2. The cooking apparatus as set forth in claim 1, wherein:
the heat reflecting unit (30) comprises a bottom plate (31), front and rear plates (33,34), side plates (32), and a pair of inner reflecting plates (35) and a pair of outer reflecting plates (36) positioned within the front, rear, bottom, and side plates (31-34);
the inner reflecting plates (35) are positioned in contact with each other at upper ends thereof, and the upper ends of the inner reflecting plates (35) are farther from the bottom plate (31) than the upper ends of the outer reflecting plates (36) which are spaced apart from each other; and
the front plate comprises an upper surface (33c), and inner and outer surfaces (33a,33b), and the front plate is provided in the upper surface (33c) thereof with a water inlet (39), and in the inner surface (33a) thereof, at a predetermined distance from the bottom plate (31), the front plate is provided with the water level maintaining unit (41), that has at least one overflow hole (41).

3. The cooking apparatus as set forth in claim 2, wherein:
the overflow hole (41) is positioned at a distance from the bottom plate (31) substantially equal to that of the upper ends of the outer reflecting plates (36) so that the water contained in the inner space (38) of the heat reflecting unit (30) is maintained at a level corresponding to that of the upper ends of the outer reflecting plates (36).

4. The cooking apparatus as set forth in claim 2 or 3, wherein the outer surface of the front plate of the heat reflecting unit (30) comprises:
a water level window (42), to ascertain the water level of the inner space (38) of the heat reflecting unit (30).

5. The cooking apparatus as set forth in any of claims 2 to 4, wherein:
the bottom plate (31) is convex in relation to the inner space (38) of the heat reflecting unit (30), to reduce a volume of the inner space (38).

6. The cooking apparatus as set forth in any of claims 2 to 5, wherein:
the front plate (33) of the heat reflecting unit (30) is positioned outside the body (10) when the heat reflecting unit (30) is inserted into the body (10), so that oil and sauce separated from food are prevented from entering the inner space (38) of the heat reflecting unit (30) through the water inlet (39).

7. The cooking apparatus as set forth in any preceding claim, wherein:
the heat reflecting unit (30) is removably mounted in the body (10) to reflect heat from the heating unit (16) towards the grill unit (20), and collect liquid and particulate separated from food during cooking.

8. The cooking apparatus according to claim 7, wherein:
the heat reflecting unit (30) is maintained below a predetermined temperature so that the collected liquid and particulate do not burn.

9. The cooking apparatus according to claim 7 or 8, wherein the heat reflecting unit (30) comprises:
a frame (31-34); and
a collecting and reflecting structure (35-36) attached to the frame (31-34) to reflect heat from the heating unit toward the grill unit (20), and collect the liquid and particulate separated from the food during cooking.

10. The cooking apparatus according to claim 9, wherein the collecting and reflecting structure (35-36) comprises:
inner reflecting plates (35), non-coplanarly joined at first edges thereof; and
outer reflecting plates (36), each non-coplanarly joined to a second edge of one of the inner reflecting plates (35).

11. The cooking apparatus according to claim 10, wherein the collecting and reflecting structure (35-36) further comprises:
at least one recess (37) defined where at least one of the inner reflecting plates (35) joins the corresponding outer reflecting plate (36), to collect the liquid separated from the food during cooking.

12. The cooking apparatus according to any of claims 9 to 11, wherein:
the frame (31-34) and the collecting and reflecting structure (35-36) define a cavity (38) therebetween, in which a cooling fluid is housed to cool the collecting and reflecting structure (35-36).

13. The cooking apparatus according to claim 12, wherein the frame (31-34) comprises:
a fluid inlet (39) in communication with the cavity (38), to introduce the cooling fluid to the cavity (38).

14. The cooking apparatus according to claim 13, wherein the frame (31-34) further comprises:
an outer member (40) that remains outside the body (10) when the heat reflecting unit (30) is mounted in the body (10), wherein the fluid inlet (39) is located on the outer body (10) to prevent the liquid and particulate separated from the food during cooking from entering the cavity (38) through the fluid inlet (39).

15. The cooking apparatus according to claim 14, wherein the frame (31-34) further comprises:
an overflow hole (41) in communication with the cavity (38), to prevent a volume of cooling fluid in the cavity (38) from exceeding a predetermined volume.

16. The cooking apparatus according to claim 15, wherein the collecting and reflecting structure (35-36) comprises:
inner reflecting plates (35), non-coplanarly joined at first edges thereof; and
outer reflecting plates (36), each non-coplanarly joined to a second edge of one of the inner reflecting plates (35), wherein at least one recess (37) is defined where at least one of the inner reflecting plates (35) joins the corresponding outer reflecting plate, to collect the liquid separated from the food during cooking, and the overflow hole (41) is positioned such that excess cooling fluid drains into the recess.

17. The cooking apparatus according to claim 15 or 16, wherein:
the collecting and reflecting structure (35-36) comprises inner reflecting plates (35), non-coplanarly joined at first edges thereof, and outer reflecting plates (36), each non-coplanarly joined to a second edge of one of the inner reflecting plates (35);
the at least one heating unit (16) is positioned adjacent to at least one of the outer reflecting plates (36); and
the overflow hole (41) is positioned such that the when the volume of cooling fluid equals the predetermined volume, the cooling fluid cools a portion of the at least one of the outer-reflecting plates (36) adjacent to the at least one heating unit (16).

18. The cooking apparatus according to any of claims 14 to 17, wherein the outer member (40) comprises:
a cooling fluid level window (42) made of transparent material, to ascertain a level of cooling fluid in the cavity (38).

19. The cooking apparatus according to claim 18, wherein the cooling fluid level window (42) has a graduation corresponding to the position of the overflow hole (41).

20. The cooking apparatus according to claim 14, wherein the outer member (40) comprises:
a grip (40), to aid insertion and removal of the heat reflecting unit (30).

21. The cooking apparatus according to any of claims 12 to 20, wherein the frame (31-34) comprises:
a convex member (33) that is convex in relation to the cavity (38), to reduce a volume of the cavity (38).

22. The cooking apparatus according to any of claims 12 to 21, wherein:
the cooling fluid is water.

## Patentansprüche

1. Kochgerät mit:
einem Körper (10), in dessen einem Oberteil eine Öffnung (11) vorgesehen ist;
zumindest einer Heizeinheit (16), die in dem Körper (10) angeordnet ist;
einer Grilleinheit (20), die auf der Oberseite des Körpers (10) angebracht ist; und
einer Hitzereflexionseinheit (30), die unterhalb der Grilleinheit (20) gegenüber der Heizeinheit angeordnet ist;
**dadurch gekennzeichnet,**
**dass** die Hitzereflexionseinheit (30) einen Innenraum (38) zum Wasserfassen, einen Wassereinlass (39), durch den das Wasser in den Innenraum (38) gespeist wird, eine Wasserstandsbeibehalteeinheit (41), die geeignet ist, das Wasser unterhalb eines vorbestimmten Wasserstandes in dem Innenraum (38) zu halten, und einen Wasserdampfabzugsraum (39, 41), der in einem oberen Bereich des Innenraums (38) angeordnet ist, aufweist.

2. Kochgerät nach Anspruch 1, wobei:
die Hitzereflexionseinheit (30) eine Bodenplatte (31), Front- und Rückplatten (33, 34), Seitenplatten (32) und ein Paar innere Reflexionsplatten (35) sowie ein Paar äußere Reflexionsplatten (36) aufweist, die innerhalb der Front-, Rück-, Boden- und Seitenplatten (31-34) angeordnet sind, wobei die inneren Reflexionsplatten (35) an deren oberen Enden in gegenseitigem Kontakt zueinander angeordnet sind, und die oberen Enden der inneren Reflexionsplatten (35) weiter von der Bodenplatte (31) entfernt sind als die oberen Enden der äußeren Reflexionsplatten (36), die voneinander beabstandet sind; und
die Frontplatte eine obere Oberfläche (33c) sowie innere und äußere Oberflächen (33a, 33b) aufweist, und die Frontplatte in ihrer oberen Oberfläche (33c) einen Wassereinlass (39) aufweist und in deren inneren Oberfläche (33a) in einem vorbestimmten Abstand von der Bodenplatte (31) die Frontplatte mit der Wasserstandsbeibehalteeinheit (41) versehen ist, die zumindest ein Überlaufloch (41) aufweist.

3. Kochgerät nach Anspruch 2, wobei:
das Überlaufloch (41) in einem Abstand, der im Wesentlichen dem der oberen Enden der äußeren Reflexionsplatten (36) entspricht, von der Bodenplatte (31) angeordnet ist, so dass das in dem Innenraum (38) der Hitzereflexionseinheit (30) enthaltene Wasser bei einem Pegel, entsprechend dem der oberen Enden der äußeren Reflexionsplatten (36), gehalten wird.

4. Kochgerät nach Anspruch 2 oder 3,
wobei die äußere Oberfläche der Frontplatte der Hitzereflexionseinheit (30) aufweist:
ein Wasserstandsfenster (42), um den Wasserstand des Innenraums (38) der Hitzereflexionseinheit (30) zu ermitteln.

5. Kochgerät nach einem der Ansprüche 2 bis 4,
wobei die Bodenplatte (31) in Bezug auf den Innenraum (38) der Hitzereflexionseinheit (30) konvex ist, um das Volumen des Innenraums (38) zu verringern.

6. Kochgerät nach einem der Ansprüche 2 bis 5,
wobei die Frontplatte (33) der Hitzereflexionseinheit (30) außerhalb des Körpers (10) angeordnet ist, wenn die Hitzereflexionseinheit (30) in den Körper (10) eingesetzt wird, so dass ein Eindringen von Öl und Soße, die vom Nahrungsmittel abgesondert wurden, durch den Wassereinlass (39) in den Innenraum (38) der Hitzereflexionseinheit (30) verhindert wird.

7. Kochgerät nach einem der vorhergehenden Ansprüche,
wobei die Hitzereflexionseinheit (30) abnehmbar in dem Körper (10) angebracht ist, um Hitze von der Heizeinheit (16) in Richtung der Grilleinheit (20) zu reflektieren, und Flüssigkeit und Partikel, die während des Backens vom Nahrungsmittel abgesondert wurden, aufzufangen.

8. Kochgerät nach Anspruch 7,
wobei die Hitzereflexionseinheit (30) unterhalb einer vorbestimmten Temperatur gehalten wird, so dass die aufgefangene Flüssigkeit und die Partikel nicht anbrennen.

9. Kochgerät nach Anspruch 7 oder 8,
wobei die Hitzereflexionseinheit (30) aufweist:
einen Rahmen (31-34); und
eine Auffang- und Reflexionsstruktur (35-36), die an dem Rahmen (31-34) befestigt ist, um Hitze von der Heizeinheit in Richtung der Grilleinheit (20) zu reflektieren, und um die Flüssigkeit und die Partikel, die von dem Nahrungsmittel während des Backens abgesondert wurden, aufzufangen.

10. Kochgerät nach Anspruch 9,
wobei die Auffang- und Reflexionsstruktur (35-36) aufweist:
innere Reflexionsplatten (35), die an deren ersten Kanten nicht koplanar verbunden sind; und
äußere Reflexionsplatten (36), die jeweils nicht koplanar mit einer zweiten Kante einer der inneren Reflexionsplatten (35) verbunden sind.

11. Kochgerät nach Anspruch 10,
wobei die Auffang- und Reflexionsstruktur (35-36) ferner aufweist:
zumindest eine Aussparung (37), die dort definiert wird, wo zumindest eine der inneren Reflexionsplatten (35) an die entsprechende äußere Reflexionsplatte (36) anschließt, um von dem Nahrungsmittel während des Backens abgesonderte Flüssigkeit aufzufangen.

12. Kochgerät nach einem der Ansprüche 9 bis 11,
wobei der Rahmen (31-34) und die Auffang- und Reflexionsstruktur (35-36) einen dazwischenliegenden Hohlraum (38) definieren, in dem eine Kühlflüssigkeit aufbewahrt wird, um die Auffang- und Reflexionsstruktur (35-36) zu kühlen.

13. Kochgerät nach Anspruch 12,
wobei der Rahmen (31-34) aufweist:
einen Fluideinlass (39) in Verbindung mit dem Hohlraum (38), um die Kühlflüssigkeit in den Hohlraum (38) einzuleiten.

14. Kochgerät nach Anspruch 13,
wobei der Rahmen (31-34) ferner aufweist:
ein Außenglied (40), das außerhalb des Körpers (10) verbleibt, wenn die Hitzereflexionseinheit (30) in dem Körper (10) angebracht wird, wobei der Fluideinlass (39) auf dem äußeren Körper (10) angeordnet ist, um ein Eindringen der Flüssigkeit und der Partikel, die während des Backens vom Nahrungsmittel abgesondert wurden, in den Hohlraum (38) durch den Fluideinlass (39) zu verhindern.

15. Kochgerät nach Anspruch 14,
wobei der Rahmen (31-34) ferner aufweist:
ein Überlaufloch (41) in Verbindung mit dem Hohlraum (38), um zu verhindern, dass das Volumen der Kühlflüssigkeit in dem Hohlraum (38) ein vorbestimmtes Volumen überschreitet.

16. Kochgerät nach Anspruch 15,
wobei die Auffang- und Reflexionsstruktur (35-36) aufweist:
innere Reflexionsplatten (35), die an deren ersten Kanten nicht koplanar verbunden sind; und
äußere Reflexionsplatten (35, 36), die jeweils nicht koplanar mit einer zweiten Kante einer der inneren Reflexionsplatten (35) verbunden sind, wobei zumindest eine Aussparung (37) dort definiert wird, wo zumindest eine der inneren Reflexionsplatten (35) an die entsprechende äußere Reflexionsplatte anschließt, um von dem Nahrungsmittel während des Backens abgesonderte Flüssigkeit aufzufangen, und das Überlaufloch (41) derart angeordnet ist, dass überschüssige Flüssigkeit in die Aussparung abläuft.

17. Kochgerät nach Anspruch 15 oder 16,
wobei die Auffang- und Reflexionsstruktur (35-36) innere Reflexionsplatten (35), die an deren ersten Kanten nicht koplanar verbunden sind, und äußere Reflexionsplatten (36) aufweist, die jeweils nicht koplanar mit einer zweiten Kante einer der inneren Reflexionsplatten (35) verbunden sind; und
die zumindest eine Heizeinheit (16) benachbart zu zumindest einer der äußeren Reflexionsplatten (36) angeordnet ist; und
das Überlaufloch (41) derart angeordnet ist, dass wenn das Volumen an Kühlflüssigkeit dem vorbestimmten Volumen entspricht, die Kühlflüssigkeit einen Bereich von zumindest einer der äußeren Reflexionsplatten (36) kühlt, die benachbart zu der zumindest einen Heizeinheit (16) sind.

18. Kochgerät nach einem der Ansprüche 14 bis 17,
wobei das Außenglied (40) aufweist:
ein Kühlflüssigkeitsstandfenster (42), das aus transparentem Material gefertigt ist, um den Stand an Kühlflüssigkeit in dem Hohlraum (38) zu ermitteln.

19. Kochgerät nach Anspruch 18,
wobei das Kühlflüssigkeitsstandfenster (42) eine Abstufung entsprechend der Position des Überlauflochs (41) aufweist.

20. Kochgerät nach Anspruch 14,
wobei das Außenglied (40) aufweist:
einen Griff (40), um das Einsetzen und Entfernen der Hitzereflexionseinheit (30) zu erleichtern.

21. Kochgerät nach einem der Ansprüche 12 bis 20,
wobei der Rahmen (31-34) aufweist:
ein konvexes Glied (33), das in Bezug auf den Hohlraum (38) konvex ist, um das Volumen des Hohlraumes (38) zu verringern.

22. Kochgerät nach einem der Ansprüche 12 bis 21,
wobei die Kühlflüssigkeit Wasser ist.

## Revendications

1. Appareil de cuisson comprenant :
- un bloc (10), prévu dans une partie supérieure de l'appareil, muni d'une ouverture (11),
- au moins une unité de chauffe (16) disposée dans le bloc (10),
- une unité de grill (20) montée sur la partie supérieure du bloc (10) et
- une unité de réflexion de la chaleur (30) disposée en dessous de l'unité de grill (20) de manière à faire face à l'unité de chauffe,
**caractérisé en ce que** l'unité de réflexion de la chaleur (30) comporte un espace interne (38) servant à contenir de l'eau, une entrée d'eau (39) à travers laquelle l'eau est introduite dans l'espace interne (38), une unité de maintien du niveau d'eau (41) adaptée au maintien de l'eau en dessous d'un niveau d'eau prédéterminé dans l'espace interne (38) et un espace de décharge de la vapeur d'eau (39, 41) positionné dans une partie supérieure de l'espace interne (38).

2. Appareil de cuisson tel qu'il est énoncé dans la revendication 1, dans lequel :
- l'unité de réflexion de la chaleur (30) comprend une plaque inférieure (31), des plaques avant et arrière (33, 34), des plaques latérales (32) et une paire de plaques de réflexion internes (35) et une paire de plaques de réflexion externes (36) positionnées à l'intérieur des plaques avant, arrière, inférieures et latérales (31 à 34),
- les plaques de réflexion internes (35) sont positionnées de manière à être en contact les unes avec les autres à des extrémités supérieures de celles-ci et les extrémités supérieures des plaques de réflexion internes (35) sont situées plus loin de la plaque inférieure (31) que les extrémités supérieures des plaques de réflexion externes (36) qui sont espacées les unes des autres et
- la plaque avant comprend une surface supérieure (33c) et des surfaces internes et externes (33a, 33b) et la plaque avant est prévue dans la surface supérieure (33c) de celle-ci avec une entrée d'eau (39) et, dans la surface interne (33a) de celle-ci, à une distance prédéterminée de la plaque inférieure (31), la plaque avant est équipée de l'unité de maintien du niveau d'eau (41) qui comporte au moins un orifice de trop-plein (41).

3. Appareil de cuisson tel qu'il est énoncé dans la revendication 2, dans lequel :
- l'orifice du trop-plein (41) est positionné à une distance de la plaque inférieure (31) sensiblement égale à celle des extrémités supérieures des plaques de réflexion externes (36) de telle sorte que l'eau contenue dans l'espace interne (38) de l'unité de réflexion de la chaleur (30) soit maintenue à un niveau correspondant à celui des extrémités supérieures des plaques de réflexion externes (36).

4. Appareil de cuisson tel qu'il est énoncé dans la revendication 2 ou 3, dans lequel la surface externe de la plaque avant de l'unité de réflexion de la chaleur (30) comprend :
- une fenêtre de contrôle du niveau d'eau (42) permettant de vérifier le niveau d'eau de l'espace interne (38) de l'unité de réflexion de la chaleur (30).

5. Appareil de cuisson tel qu'il est énoncé dans l'une quelconque des revendications 2 à 4, dans lequel :
- la plaque inférieure (31) est convexe par rapport à l'espace interne (38) de l'unité de réflexion de la chaleur (30) afin de réduire le volume de l'espace interne (38).

6. Appareil de cuisson tel qu'il est énoncé dans l'une quelconque des revendications 2 à 5, dans lequel :
- la plaque avant (33) de l'unité de réflexion de la chaleur (30) est positionnée à l'extérieur du bloc (10) lorsque l'unité de réflexion de la chaleur (30) est insérée dans le bloc (10) de manière à empêcher que l'huile et la sauce s'étant détachées de l'aliment ne pénètrent dans l'espace interne (38) de l'unité de réflexion de la chaleur (30) à travers l'entrée d'eau (39).

7. Appareil de cuisson tel qu'il est énoncé dans l'une quelconque des revendications précédentes, dans lequel :
- l'unité de réflexion de la chaleur (30) est montée de manière amovible dans le bloc (10) pour réfléchir la chaleur provenant de l'unité de chauffe (16) en direction de l'unité de grill (20) et recueillir le liquide et les particules s'étant détachées de l'aliment pendant la cuisson.

8. Appareil de cuisson selon la revendication 7, dans lequel :
- l'unité de réflexion de la chaleur (30) est maintenue en dessous d'une température prédéterminée de telle sorte que le liquide et les particules recueillies ne brûlent pas.

9. Appareil de cuisson selon la revendication 7 ou 8, dans lequel l'unité de réflexion de la chaleur (30) comprend:
- un cadre (31 à 34) et
- une structure de recueil et de réflexion (35 à 36) fixée au cadre (31 à 34) pour réfléchir la chaleur provenant de l'unité de chauffe en direction de l'unité de grill (20) et recueillir le liquide et les particules s'étant détachées de l'aliment pendant la cuisson.

10. Appareil de cuisson selon la revendication 9, dans lequel la structure de recueil et de réflexion (35 à 36) comprend :
- des plaques de réflexion internes (35), jointes de manière non coplanaire au niveau des premiers bords de celles-ci et
- des plaques de réflexion externes (36), chacune jointe de manière non coplanaire à un second bord de l'une des plaques de réflexion internes (35).

11. Appareil de cuisson selon la revendication 10, dans lequel la structure de recueil et de réflexion (35 à 36) comprend en outre :
- au moins une cavité (37) définie à l'emplacement où au moins l'une des plaques de réflexion internes (35) rejoint la plaque de réflexion externe (36) correspondante afin de recueillir le liquide s'étant détaché de l'aliment pendant la cuisson.

12. Appareil de cuisson selon l'une quelconque des revendications 9 à 11 dans lequel :
le cadre (31 à 34) et la structure de recueil et de réflexion (35 à 36) définissent une cavité (38) entre eux, cavité dans laquelle est placé un fluide de refroidissement pour refroidir la structure de recueil et de réflexion (35 à 36).

13. Appareil de cuisson selon la revendication 12 dans lequel le cadre (31 à 34) comprend :
- une entrée de fluide (39) en communication avec la cavité (38) pour introduire le fluide de refroidissement dans la cavité (38).

14. Appareil de cuisson selon la revendication 13 dans lequel le cadre (31 à 34) comprend en outre :
- un élément externe (40) qui reste à l'extérieur du bloc (10) lorsque l'unité de réflexion de la chaleur (30) est montée dans le bloc (10), dans lequel l'entrée de fluide (39) est située sur le bloc externe (10) pour empêcher le liquide et les particules s'étant détachées de l'aliment pendant la cuisson de pénétrer dans la cavité (38) par l'entrée de fluide (39).

15. Appareil de cuisson selon la revendication 14 dans lequel le cadre (31 à 34) comprend en outre :
- un orifice du trop-plein (41) en communication avec la cavité (38) pour empêcher un volume de fluide de refroidissement dans la cavité (38) de dépasser un volume prédéterminé.

16. Appareil de cuisson selon la revendication 15, dans lequel la structure de recueil et de réflexion (35 à 36) comprend :
- des plaques de réflexion internes (35), jointes de manière non coplanaire au niveau des premiers bords de celles-ci et
- des plaques de réflexion externes (36), chacune jointe de manière non coplanaire à un second bord de l'une des plaques de réflexion internes (35),
dans lequel au moins une cavité (37) est définie à l'emplacement où au moins l'une des plaques de réflexion internes (35) rejoint la plaque de réflexion externe correspondante afin de recueillir le liquide s'étant détaché de l'aliment pendant la cuisson et l'orifice de trop-plein (41) est positionné de telle sorte que l'excès de fluide de refroidissement s'évacue dans la cavité.

17. Appareil de cuisson selon la revendication 15 ou 16, dans lequel :
- la structure de recueil et de réflexion (35 à 36) comprend des plaques de réflexion internes (35), jointes de manière non coplanaire au niveau des premiers bords de celles-ci, et des plaques de réflexion externes (36), chacune jointe de manière non coplanaire à un second bord de l'une des plaques de réflexion internes (35),
- la au moins une unité de chauffe (16) est positionnée de manière adjacente à au moins l'une des plaques de réflexion externes (36) et
- l'orifice du trop-plein (41) est positionné de telle sorte que, lorsque le volume de fluide de refroidissement est égal au volume prédéterminé, le fluide de refroidissement refroidit une partie d'au moins l'une des plaques de réflexion externes (36) adjacente à la au moins une unité de chauffe (16).

18. Appareil de cuisson selon l'une quelconque des revendications 14 à 17 dans lequel l'élément externe (40) comprend :
- une fenêtre de contrôle du niveau de fluide de refroidissement (42) composée d'un matériau transparent permettant de vérifier le niveau de fluide de refroidissement dans la cavité (38).

19. Appareil de cuisson selon la revendication 18, dans lequel la fenêtre de contrôle du niveau de fluide de refroidissement (42) présente une graduation correspondant à la position de l'orifice du trop-plein (41).

20. Appareil de cuisson selon la revendication 14, dans lequel l'élément externe (40) comprend :
- une poignée (40) pour faciliter l'insertion et le retrait de l'unité de réflexion de la chaleur (30).

21. Appareil de cuisson selon l'une quelconque des revendications 12 à 20, dans lequel le cadre (31 à 34) comprend :
- un élément convexe (33) qui est convexe par rapport à la cavité (38) afin de réduire un volume de la cavité (38).

22. Appareil de cuisson selon l'une quelconque des revendications 12 à 21, dans lequel :
- le fluide de refroidissement est de l'eau.
